# EUROPEAN PATENT APPLICATION

(11) **EP 4 517 950 A1**
(43) Date of publication of application: **05.03.2025**
(21) Application number: 24196480.8
(22) Date of filing: 26.08.2024
(51) Int. Cl.: H01M 50/148, H01M 50/152, H01M 50/188, H01M 50/325

(54) **BATTERY CAP AND BATTERY INCLUDING THE BATTERY CAP**

(30) Priority: 31.08.2023 CN 202311122621
(71) Applicant: Techtronic Cordless GP, Anderson, SC 29621 (US)
(72) Inventor: YI, Ding Xing, Dongguan City (CN); HAN, Zhi Qing, Dongguan City (CN); DING, Xi Hui, Dongguan City (US)
(74) Representative: Novagraaf Group

(57) **Abstract**

The present invention relates to a battery cap and a battery including the battery cap. The battery cap comprises a top cover; an anti-explosion valve plate, the anti-explosion valve plate being arranged below the top cover and electrically connected to the top cover, and an outer periphery dimension of the anti-explosion valve plate being smaller than an outer periphery dimension of the top cover; an orifice plate, the orifice plate being arranged below the anti-explosion valve plate, and the orifice plate and the anti-explosion valve plate being electrically connected at a central position, and being separated at a peripheral position with a gap; and an internal washer, the internal washer being used for sealing the gap between the outer peripheries of the anti-explosion valve plate and the orifice plate. The present invention may effectively seal electrolyte under normal operating conditions, and quickly and effectively relieve pressure in an emergency situation. Moreover, by means of the structural design of the cap, the present invention reduces the overall height of the battery cap; in a situation where the height of the battery is unchanged, the height of a jelly roll and an injection amount of electrolyte can be effectively enhanced, thereby enhancing the overall capacity of the battery.

## Description

### Technical Field

The present invention relates to the field of batteries, in particular to a battery cap. The present invention further relates a battery including the battery cap.

### Background Art

Batteries are widely used in various electronic devices, and are mainly composed of a battery cap, a shell, a jelly roll and electrolyte. In order to pursue higher battery capacity, under the restriction of a certain battery volume, the utilization ratio of space in the battery is increased to the greatest extent possible to enhance an injection amount of electrolyte. A battery cap is an important safeguard for providing battery safety; when a short circuit or fault occurs in a battery, it causes gas inside the battery to instantly increase, and if it is not possible to discharge the gas effectively in a timely manner, the battery may explode. Therefore, to ensure the safety of a battery during use, it is necessary to design a safe and effective anti-explosion structure in the cap.

Existing battery cap anti-explosion structures generally comprise an anti-explosion valve plate and an orifice plate, in order to ensure sealing during normal operation and effective pressure relief performance in abnormal situations, and the anti-explosion valve plate is generally designed to have a step structure. During normal use, the electrolyte inside the battery is isolated from the outside by means of the anti-explosion valve plate, the orifice plate, a washer and other structures; when an abnormality causes pressure to rise, effective pressure relief is realized, by means of allowing the anti-explosion valve plate to fracture and turn over, to achieve the object of explosion prevention. However, in order to ensure the above steps, excessive redundant space is generally provided between the top cover of the battery cap and the jelly roll, thereby increasing the overall height of the cap, and thus reducing the effective utilized space of the battery. Moreover, sealing of the top cover and the anti-explosion valve plate relies on wire welding in the design of existing battery caps, and if the wire welding is not sturdy enough, liquid easily leaks.

Therefore, there is a need to provide a battery cap and a battery including the cap, in order to at least partially solve the abovementioned problem.

### Summary of the Invention

The present invention provides a battery cap, which may effectively seal electrolyte under normal operating conditions, and quickly and effectively relieve pressure in an emergency situation. Moreover, by means of the structural design of the cap, the present invention reduces the overall height of the battery cap; in a situation where the height of the battery is unchanged, the height of a jelly roll and an injection amount of electrolyte can be effectively enhanced, thereby enhancing the overall capacity of the battery. Furthermore, the present invention further provides a battery including the abovementioned battery cap.

According to an aspect of the present invention, a battery cap is provided, comprising:
a top cover;
an anti-explosion valve plate, the anti-explosion valve plate being arranged below the top cover and electrically connected to the top cover, and an outer periphery dimension of the anti-explosion valve plate being smaller than an outer periphery dimension of the top cover;
an orifice plate, the orifice plate being arranged below the anti-explosion valve plate, and the orifice plate and the anti-explosion valve plate being electrically connected at a central position, and being separated at a peripheral position with a gap; and
an internal washer, the internal washer being used for sealing the gap between the outer peripheries of the anti-explosion valve plate and the orifice plate.

In an embodiment, the central position of the anti-explosion valve plate is provided with an upward recess, the central position of the orifice plate is provided with a downward recess; the downward recess is electrically connected to the upward recess; and the upward recess or the downward recess is provided with a boss structure.

In an embodiment, the upward recess is provided with the boss structure, and the boss structure protrudes from a lower surface of the anti-explosion valve plate; and the downward recess is a pit-shaped structure formed at the central position of the orifice plate.

In an embodiment, the downward recess is provided with the boss structure, and the boss structure protrudes from an upper surface of the orifice plate; and the upward recess is a pit-shaped structure formed at the central position of the anti-explosion valve plate.

In an embodiment, a sealing ring is provided between the top cover and the anti-explosion valve plate, and the material of the sealing ring is an elastic material.

In an embodiment, a lower surface of the top cover is provided with a downward annular recess, an upper surface of the anti-explosion valve plate is provided with an upward annular recess, and a space formed after the downward annular recess and the upward annular recess are closed together is used for accommodating the sealing ring.

In an embodiment, the cross sections of the downward annular recess and the upward annular recess are both isosceles triangles or semicircles, and after closing together, the downward annular recess and the upward annular recess are a rhombus structure or circular structure; preferably, the cross sections of the downward annular recess and the upward annular recess are both isosceles right triangles, and after closing together, the downward annular recess and the upward annular recess are a square structure.

In an embodiment, after closing together, the downward annular recess and the upward annular recess compress the sealing ring, and the compression ratio of the sealing ring is 20 - 30%, preferably 25%.

In an embodiment, the outer periphery dimension of the anti-explosion valve plate is the same as an outer periphery dimension of the orifice plate.

In an embodiment, an upper surface of the anti-explosion valve plate is provided with an encircling anti-explosion groove, and the anti-explosion groove is located at the inside of the upward annular recess.

In an embodiment, the bottom of the downward recess is provided with an encircling orifice plate anti-explosion groove.

In an embodiment, the cross section of the internal washer is a T-shaped structure, and the internal washer comprises a middle washer layer which is located at a portion between the anti-explosion valve plate and the orifice plate, an upper side wall which is located on an outer side of the anti-explosion valve plate and a lower side wall which is located on an outer side of the orifice plate.

In an embodiment, the upper side wall squeezes the anti-explosion valve plate, and the lower side wall squeezes the orifice plate.

In an embodiment, the thickness of the middle washer layer is slightly greater than the height of the boss structure.

In an embodiment, the thickness of the upper side wall is slightly greater than the thickness of the anti-explosion valve plate.

In an embodiment, the anti-explosion valve plate is connected to the top cover by means of welding, and the downward recess is connected to the upward recess by means of welding.

In an embodiment, the height of the top cover is less than 2.1 mm, preferably less than or equal to 1.7 mm.

In an embodiment, the height of the anti-explosion valve plate is less than 1.3 mm, preferably less than or equal to 0.6 mm.

In an embodiment, the height of the orifice plate is less than 0.5 mm, preferably less than or equal to 0.4 mm.

In an embodiment, the total height of the top cover, the anti-explosion valve plate and the orifice plate is less than 3.9 mm, preferably less than or equal to 2.7 mm.

Another aspect of the present invention provides a battery, comprising the abovementioned battery cap, an external washer and a shell,
wherein the external washer directly contacts a side wall of the top cover and portions of upper and lower surfaces of the top cover which are close to the outer periphery thereof, and is used for connecting and sealing the battery cap and the shell.

In an embodiment, the anti-explosion valve plate is connected to the top cover by means of wire welding, and the wire welding is continuous or segmented.

In an embodiment, the external washer does not cover the wire welding at the position where the external washer contacts the upper surface of the top cover.

In an embodiment, the portion of the external washer which contacts the upper surface of the top cover is provided with an encircling protrusion.

In an embodiment, the wire welding is continuous, and the external washer covers the wire welding at the position where the external washer contacts the upper surface of the top cover.

### Brief Description of the Drawings

To better understand the above and other objectives, features, advantages and functions of the present invention, reference may be made to the preferred embodiments shown in the drawings. In the drawings, identical reference signs denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a structural schematic drawing (top view) of the battery cap according to a preferred embodiment of the present invention;
Fig. 2 is a structural schematic drawing (bottom view) of the battery cap according to a preferred embodiment of the present invention;
Fig. 3 is an exploded view of the battery cap according to a preferred embodiment of the present invention;
Fig. 4 is a sectional drawing (top view) of the battery cap according to a preferred embodiment of the present invention;
Fig. 5 is a sectional drawing (level view) of the battery cap according to a preferred embodiment of the present invention;
Fig. 6 is a partially enlarged view of Fig. 5;
Fig. 7 is a structural schematic drawing (bottom view) of the anti-explosion valve plate according to a preferred embodiment of the present invention;
Fig. 8 is a structural schematic drawing (top view) of the anti-explosion valve plate according to a preferred embodiment of the present invention;
Fig. 9 is a structural schematic drawing (bottom view) of the orifice plate according to a preferred embodiment of the present invention;
Fig. 10 is a structural schematic drawing (top view) of the orifice plate according to a preferred embodiment of the present invention;
Fig. 11 is a sectional drawing (showing height) of a battery cap of the prior art; and
Fig. 12 is a sectional drawing (showing height) of the battery cap according to a preferred embodiment of the present invention.

### Key to drawings:

1 top cover
11 downward annular recess
12 wire welding
2 anti-explosion valve plate
21 upward recess
22 boss structure
23 upward annular recess
24 anti-explosion groove
3 orifice plate
31 downward recess
32 orifice plate anti-explosion groove
4 internal washer
41 middle washer layer
42 upper side wall
43 lower side wall
5 external washer
51 protrusion
6 sealing ring
A top cover height
B anti-explosion valve plate height
C orifice plate height
H total height of top cover, anti-explosion valve plate and orifice plate

### Detailed Description of the Embodiments

Specific embodiments of the present invention are now described in detail with reference to the drawings. The embodiments described herein are merely preferred embodiments of the present invention. Based on these preferred embodiments, those skilled in the art will be able to think of other ways in which the present invention could be implemented, all of which likewise fall within the scope of the present invention. In some embodiments, to avoid confusion with the present invention, some technical features known in the art are not described.

Unless otherwise defined, all of the technical and scientific terms used by the present invention have the same meanings as those commonly understood by those skilled in the art. If there is a conflict, the present invention (including definitions) is taken as the standard. Only exemplary methods and materials are described below; methods and materials similar or equivalent to those described in the present invention may all be used in experiments or tests of the present invention. The materials, methods and examples disclosed by the present invention are merely explanatory and are not intended to be restrictive. Regarding the description of numerical ranges in the present invention, it is expressly anticipated that these ranges include every intermediate number with the same degree of precision. For example, for the range of 6 to 9, the numbers 7 and 8 are considered in addition to 6 and 9, and for the range of 6.0 to 7.0, the numbers 6.0, 6.1, 6.2, 6.3, 6.4, 6.5, 6.6, 6.7, 6.8, 6.9 and 7.0 are expressly anticipated.

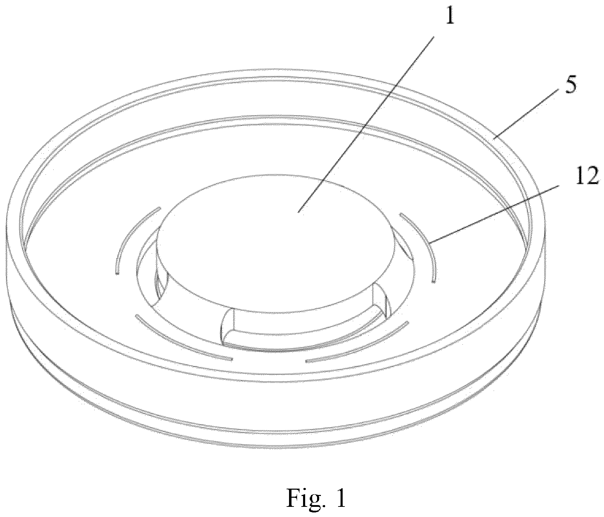

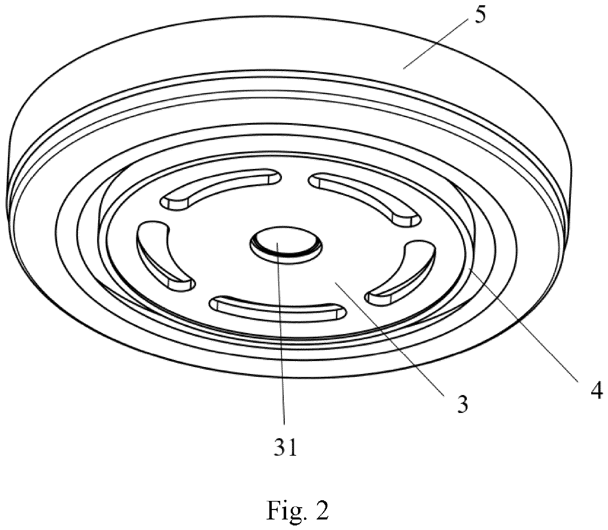

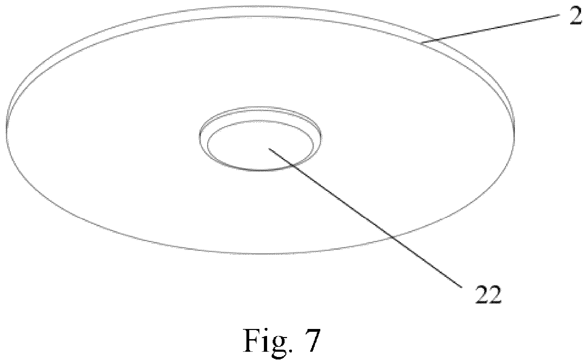

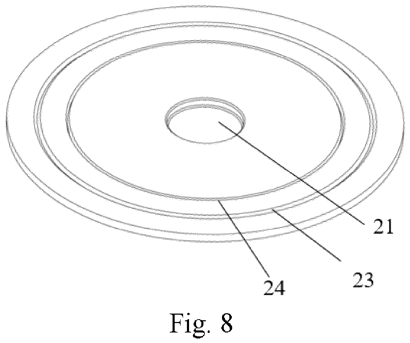

Figs. 1-10 show the battery cap according to the present invention. It must first be explained that directional and positional terms in the present invention should be understood as meaning relative directions and positions rather than absolute directions and positions. The directional and positional terms in the present invention may be explained with reference to the exemplary structures shown in Figs. 1 - 10.

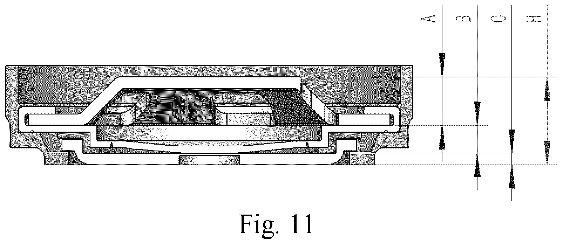

As shown in Fig. 11, in an existing battery cap, to effectively seal electrolyte under normal operating conditions, and quickly and effectively relieve pressure in an emergency situation, a higher spatial margin to allow the anti-explosion valve plate to turn over is generally designed, thereby increasing the overall height of the cap, and sealing between the top cover and the anti-explosion valve plate relies on wire welding, and if the wire welding is not sturdy enough, liquid easily leaks.

The present invention provides a battery cap, which can partially solve the abovementioned problem of existing battery cap structures, and, while ensuring that electrolyte is sealed effectively under normal operating conditions, and pressure is relieved quickly and effectively in an emergency situation, can reduce the overall height of the cap, thereby enhancing a jelly roll height and an injection amount of electrolyte.

Referring to Figs. 1 - 10, the battery cap of a preferred embodiment of the present invention comprises the following structures:
a top cover 1;
an anti-explosion valve plate 2, the anti-explosion valve plate 2 being arranged below the top cover 1 and electrically connected to the top cover 1, and an outer periphery dimension of the anti-explosion valve plate 2 being smaller than an outer periphery dimension of the top cover 1;
an orifice plate 3, the orifice plate 3 being arranged below the anti-explosion valve plate 2, and the orifice plate 3 and the anti-explosion valve plate 2 being electrically connected at a central position, and being separated at a peripheral position with a gap; and
an internal washer 4, the internal washer 4 being used for sealing the gap between the outer peripheries of the anti-explosion valve plate 2 and the orifice plate 3.

It should be explained that, although Figs. 1 - 12 all show a cylindrical battery cap, a person skilled in the art will understand that the battery cap structure of the present invention may also be suitable for a square battery. Moreover, for a square battery, the structures in the figures need only be converted from being round to being corresponding square shapes. In the conversion process, in order to ensure the technical effects of the present invention are realized, the square structures are appropriately adjusted; for example, when the internal washer 4 is converted from being annular to being square, it is necessary to ensure the sealing thereof by structural design. Moreover, for a person skilled in the art, the conversion and adjustment are conventional operations which do not require inventive effort.

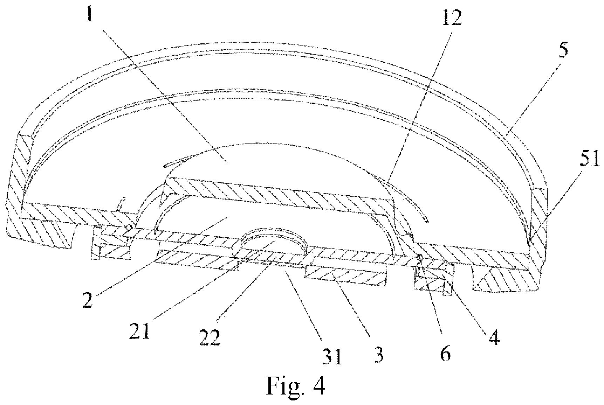

The outer periphery dimension of the present invention means an outer edge dimension of a component, corresponding to the diameter in a cylindrical battery, and corresponding to the corresponding edge length in a square battery. As shown in Fig. 11, the outer periphery dimension of the anti-explosion valve plate in the prior art is greater than the outer periphery dimension of the top cover, and the outer periphery of the anti-explosion valve plate wraps the outer periphery of the top cover to obtain a better sealing effect, but this also increases the height of the anti-explosion valve plate. As shown in Fig. 4, the internal washer 4 is used for sealing the gap between the outer peripheries of the anti-explosion valve plate 2 and the orifice plate 3, that is, ensuring that the space between the edges of the anti-explosion valve plate 2 and the orifice plate 3 is sealed.

In addition, "electrical connection" in the present invention refers to an electrically conductive connection between two components, and requires a certain connection strength, such as from a connection using welding or by adhesion using an electrically conductive adhesive, or another means, and is not restricted to this.

The structure in which the orifice plate 3 and the anti-explosion valve plate 2 are electrically connected at a central position, and separated at a peripheral position with a gap, need not be specifically defined; it suffices that the abovementioned function is satisfied. For example, as shown in Fig. 11, the anti-explosion valve plate may be a structure in the prior art which is downwardly depressed as a whole.

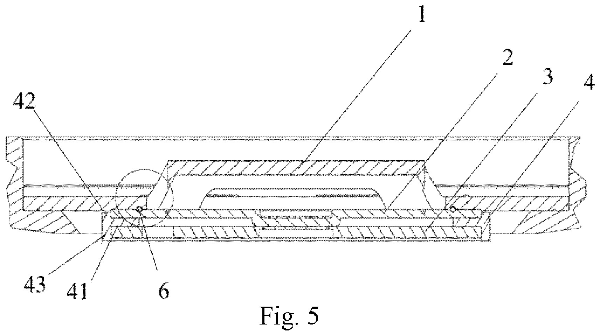

To realize a better anti-explosion effect, as a preferred embodiment, as shown in Figs. 4 and 5, the central position of the anti-explosion valve plate 2 is provided with an upward recess 21 which opens upward; the central position of the orifice plate 3 is provided with a downward recess 31 which opens downward; the downward recess 31 is electrically connected to the upward recess 21 (that is, forming a current interrupt device (CID)); and the upward recess 21 or the downward recess 31 is provided with a boss structure 22, such that a gap is retained between the anti-explosion valve plate 2 and the orifice plate 3 (the gap is used for the entry of gas produced when the battery acts abnormally in order to activate the CID).

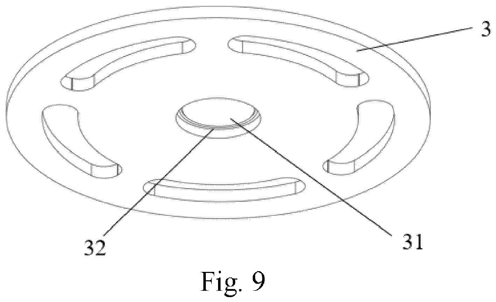

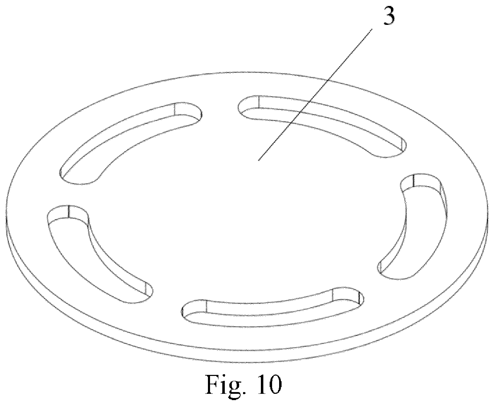

Referring to Figs. 4, 5 and 7 - 10, the boss structure 22 is used for retaining a gap between the anti-explosion valve plate 2 and the orifice plate 3, and the gap is used for the entry of gas produced when the battery acts abnormally in order to activate the CID. A person skilled in the art will understand that, as a preferred embodiment, the boss structure 22 may be formed by the bottom of the upward recess 21, and the boss structure 22 protrudes from a lower surface of the anti-explosion valve plate 2 (see Figs. 4, 5 and 7); correspondingly, the downward recess 31 is pit-shaped structure (preferably a cylindrical recess) formed at the central position of the orifice plate 3, and an upper surface of the orifice plate 3 is a planar surface (see Figs. 9 and 10). As another preferred embodiment, although not shown, a person skilled in the art will understand that the boss structure may be formed by the top of the downward recess 31, and the boss structure protrudes from the upper surface of the orifice plate 3; correspondingly, the upward recess 21 is a pit-shaped structure (preferably a cylindrical recess) formed at the central position of the anti-explosion valve plate 2, and the lower surface of the anti-explosion valve plate 2 is a planar surface.

Continuing with reference to Fig. 1, the top cover 1 of the present invention is provided with a ventilation hole for relieving pressure, which is a conventional structure in the art, and the present invention does not impose a specific limitation on the structure thereof. Due to the special design of the structure of the anti-explosion valve plate 2 in the present invention, the space used by the anti-explosion valve plate 2 when turning up and over can be made smaller, and thus the height A of the top cover 1 may be reduced.

In order to cause a certain sealing effect between the anti-explosion valve plate 2 and the top cover 1, the two are connected by means of wire welding 12; the wire welding 12 surrounds the center of the anti-explosion valve plate 2 and the top cover 1, and the wire welding 12 may be continuous or segmented, preferably continuous.

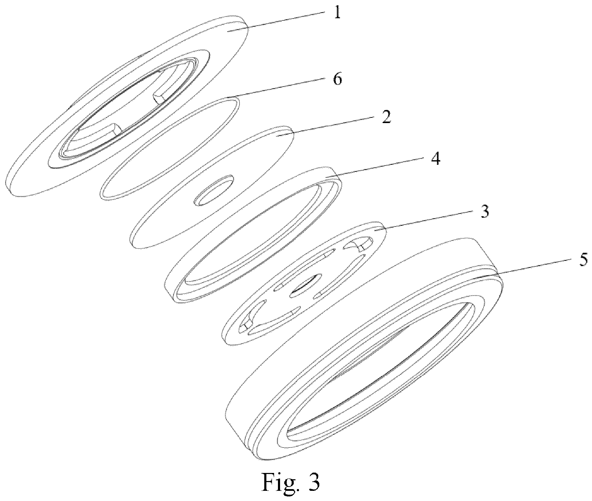

To achieve a better sealing effect, as shown in Figs. 3 - 6, as a further preferred embodiment, a sealing ring 6 is provided between the top cover 1 and the anti-explosion valve plate 2, and the material of the sealing ring 6 is an elastic material, such as rubber, etc. This is for further sealing the top cover 1 and the anti-explosion valve plate. Specifically, as a preferred embodiment, a lower surface of the top cover 1 is provided with a downward annular recess 11, an upper surface of the anti-explosion valve plate 2 is provided with an upward annular recess 23, and a space formed after the downward annular recess 11 and the upward annular recess 23 are closed together is used for accommodating the sealing ring 6.

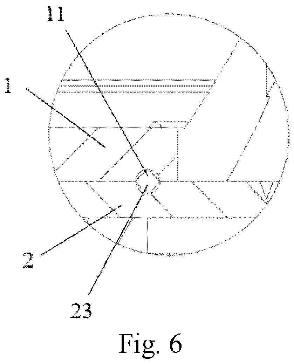

Referring to Figs. 5 and 6, as a preferred embodiment, the cross sections of the downward annular recess 11 and the upward annular recess 23 are both isosceles triangles or semicircles, and after closing together, the downward annular recess 11 and the upward annular recess 23 are a rhombus structure or circular structure. As a further preferred embodiment, the cross sections of the downward annular recess 11 and the upward annular recess 23 are both isosceles right triangles, and after closing together, the downward annular recess 11 and the upward annular recess 23 are a square structure. To realize a better sealing effect, as a preferred embodiment, after closing together, the downward annular recess 11 and the upward annular recess 23 compress the sealing ring 6, and the compression ratio of the sealing ring 6 is 20 - 30%, preferably 25%. The compression ratio is calculated with the following formula: sealing ring compression ratio = (sealing ring original diameter - compressed diameter) ÷ sealing ring original diameter x 100%, where in this case the diameter is the diameter of the sealing ring cross section. For example, the sealing ring original diameter is 0.2 mm, the compressed diameter is 0.15 mm, hence the sealing ring compression ratio is 25%.

As a preferred embodiment, referring to Figs. 4 and 5, the outer periphery dimension of the anti-explosion valve plate 2 is the same as an outer periphery dimension of the orifice plate 3. The internal washer 4 may be a conventional annular washer structure, and preferably, the cross section of the internal washer 4 is a T-shaped structure. As shown in Fig. 5, the internal washer 4 comprises a middle washer layer 41 which is located at a portion between the anti-explosion valve plate 2 and the orifice plate 3, an upper side wall 42 which is located on an outer side of the anti-explosion valve plate 2 and a lower side wall 43 which is located on an outer side of the orifice plate 3. That is, the upper side wall 42 is used for accommodating the anti-explosion valve plate 2, and the lower side wall 43 is used for accommodating the orifice plate 3. As a further preferred embodiment, the upper side wall 42 squeezes the anti-explosion valve plate 2 (an inner diameter of the upper side wall 42 is slightly less than the diameter of the anti-explosion valve plate 2), and the lower side wall 43 squeezes the orifice plate 3 (an inner diameter of the lower side wall 43 is slightly less than the diameter of the orifice plate 3), so as to effectively fix the anti-explosion valve plate 2 and the orifice plate 3, and improve the sealing effect thereof. Preferably, the thickness of the middle washer layer 41 is slightly greater than the height of the boss structure 22; that is, the anti-explosion valve plate 2 and the orifice plate 3 squeeze the middle washer layer 41 to a certain extent, to improve the sealing effect between the outer peripheries of the anti-explosion valve plate 2 and the orifice plate 3. Also, more preferably, the thickness of the upper side wall 42 is slightly greater than the thickness of the anti-explosion valve plate 2; that is, the upper side wall 42 squeezes the top cover 1 to a certain extent, to improve the sealing effect between the anti-explosion valve plate 2 and the top cover 1. In addition, such a design, while ensuring the abovementioned sealing performance, causes the structure formed by the anti-explosion valve plate 2, the orifice plate 3 and the internal washer 4 to be more compact, reducing the space occupied thereby.

As a preferred embodiment, the downward recess 31 is connected to the upward recess 21 by means of welding, for example spot welding, to provide a certain connection strength and provide better electrical conductivity. The connection strength must be such that the two can be separated when abnormal use of the battery produces a certain amount of gas; that is, activation of the CID breaks the battery circuit.

In addition, so that turning over of the anti-explosion valve plate 2 at a certain gas pressure can be better realized, as a preferred embodiment, as shown in Figs. 4, 5 and 8, an encircling anti-explosion groove 24 is provided on the upper surface of the anti-explosion valve plate 2, and the anti-explosion groove 24 is located at the inside of the upward annular recess 23. The dimensions of the anti-explosion groove 24, such as depth, must be such that, when abnormal use of the battery produces a certain amount of gas, the anti-explosion valve plate 2 can turn over, even to the extent that the anti-explosion groove 24 splits open and gas is discharged, to prevent the battery from exploding.

As a further preferred embodiment, as shown in Fig. 9, the bottom of the downward recess 31 is provided with an encircling orifice plate anti-explosion groove 32, which can cause the downward recess 31 to depress downward, when abnormal use of the battery produces a certain amount of gas, so as to better realize separation of the downward recess 31 and the upward recess 21.

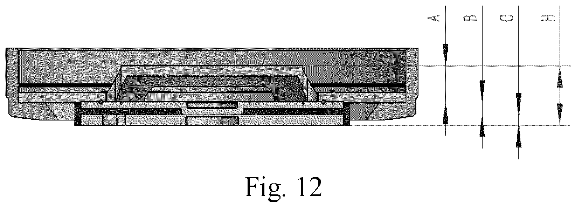

By means of the above structural design of the present invention, on the basis that the battery cap satisfies a certain sealing performance and anti-explosion performance, the height of the cap can be reduced to the greatest extent possible. As a non-limiting embodiment, referring to Figs. 11 and 12 and the table below, compared with the prior art, the height of the top cover 1 of the present invention is less than 2.1 mm, preferably less than or equal to 1.7 mm; the height of the anti-explosion valve plate 2 is less than 1.3 mm, preferably less than or equal to 0.6 mm; and the height of the orifice plate 3 is less than 0.5 mm, preferably less than or equal to 0.4 mm. Thus the following may be satisfied: the total height of the top cover 1, the anti-explosion valve plate 2 and the orifice plate 3 is less than 3.9 mm, preferably less than or equal to 2.7 mm.

| | Prior art/mm | The present invention/mm | Reduction/mm |
|---|---|---|---|
| Top cover height (A) | 2.10 | 1.70 | 0.40 |
| Anti-explosion valve plate height (B) | 1.30 | 0.60 | 0.70 |
| Orifice plate height (C) | 0.50 | 0.40 | 0.10 |
| Total height (H) | 3.90 | 2.70 | 1.20 |

It can be seen from the above table that, compared with the prior art, the cap height of the present invention can be reduced by 31%. In a situation where the height of the battery is unchanged, the height of the jelly roll and the injection amount of electrolyte can be effectively enhanced, thereby enhancing the overall capacity of the battery.

Another aspect of the present invention provides a battery, comprising the abovementioned battery cap of the present invention, an external washer 5 and a shell; and
continuing with reference to Figs. 1 - 5, the external washer 5 directly contacts a side wall of the top cover 1 and portions of upper and lower surfaces of the top cover 1 which are close to the outer periphery thereof, and is used for connecting and sealing the battery cap and the shell.

As an embodiment, as shown in Figs. 1 and 4, the anti-explosion valve plate 2 is connected to the top cover 1 by means of wire welding 12, and the wire welding 12 is continuous or segmented.

To realize a better sealing effect, as shown in Figs. 1 and 4, as a preferred embodiment, the external washer 5 does not cover the wire welding 12 at the position where the external washer 5 contacts the upper surface of the top cover 1. A better sealing effect is realized by a joint effect of the wire welding 12 and the external washer 5.

As shown in Fig. 4, as a further preferred embodiment, the portion of the external washer 5 which contacts the upper surface of the top cover 1 is provided with an encircling protrusion 51, and when the external washer 5 contacts the upper surface of the top cover 1, the protrusion 51 can realize a better sealing effect.

As another embodiment, the wire welding 12 is continuous, the external washer 5 covers the wire welding 12 at the position where the external washer 5 contacts the upper surface of the top cover 1, and since the wire welding 12 is a continuous protrusion, when the external washer 5 contacts the upper surface of the top cover 1 and covers the wire welding 12, the protrusion also can realize a better sealing effect.

The present invention does not impose a specific limitation on the materials of the internal washer 4 and the external washer 5; it suffices that the sealing effect can be satisfied, for example, with an elastic material, rubber, etc.

In addition, as another aspect of the present invention, an assembly method for a battery cap is provided, the method comprising the following steps:
step 1, mounting a sealing ring 6 in a downward annular recess 11 of a top cover 1, fastening an upward annular recess 23 of an anti-explosion valve plate 2 on the sealing ring 6;
step 2, compressing the top cover 1 and the anti-explosion valve plate 2, and welding same by wire welding; and
step 3, fitting an upper side of the internal washer 4 over the anti-explosion valve plate 2, fitting an orifice plate 3 into a lower side of the internal washer 4, and connecting a downward recess 31 of the orifice plate 3 to an upward recess 21 of the anti-explosion valve plate 2 by means of welding.

The above description of various embodiments of the present invention is provided for descriptive purposes to a person skilled in the art. It is not intended that the present invention be exclusive or limited to a single disclosed embodiment. As above, those skilled in the field of the above teaching will understand various alternatives and variants of the present invention. Thus, although some alternative embodiments have been specifically described, those of ordinary skill in the art will understand, or develop with relative ease, other embodiments. The present invention is intended to include all alternatives, modifications and variants of the present invention described here, as well as other embodiments which fall within the spirit and scope of the present invention described above.

## Claims

1. A battery cap, wherein the battery cap comprises:
a top cover (1);
an anti-explosion valve plate (2), the anti-explosion valve plate (2) being arranged below the top cover (1) and electrically connected to the top cover (1), and an outer periphery dimension of the anti-explosion valve plate (2) being smaller than an outer periphery dimension of the top cover (1);
an orifice plate (3), the orifice plate (3) being arranged below the anti-explosion valve plate (2), and the orifice plate (3) and the anti-explosion valve plate (2) being electrically connected at a central position, and being separated at a peripheral position with a gap; and
an internal washer (4), the internal washer (4) being used for sealing the gap between the outer peripheries of the anti-explosion valve plate (2) and the orifice plate (3).

2. The battery cap as claimed in claim 1, wherein the central position of the anti-explosion valve plate (2) is provided with an upward recess (21), the central position of the orifice plate (3) is provided with a downward recess (31); the downward recess (31) is electrically connected to the upward recess (21); and the upward recess (21) or the downward recess (31) is provided with a boss structure (22).

3. The battery cap as claimed in claim 2, wherein the upward recess (21) is provided with the boss structure (22), and the boss structure (22) protrudes from a lower surface of the anti-explosion valve plate (2); and the downward recess (31) is a pit-shaped structure formed at the central position of the orifice plate (3).

4. The battery cap as claimed in claim 2, wherein the downward recess (31) is provided with the boss structure, and the boss structure protrudes from an upper surface of the orifice plate (3); and the upward recess (21) is a pit-shaped structure formed at the central position of the anti-explosion valve plate (2).

5. The battery cap as claimed in claim 1, wherein a sealing ring (6) is provided between the top cover (1) and the anti-explosion valve plate (2), and the material of the sealing ring (6) is an elastic material.

6. The battery cap as claimed in claim 5, wherein a lower surface of the top cover (1) is provided with a downward annular recess (11), an upper surface of the anti-explosion valve plate (2) is provided with an upward annular recess (23), and a space formed after the downward annular recess (11) and the upward annular recess (23) are closed together is used for accommodating the sealing ring (6).

7. The battery cap as claimed in claim 6, wherein the cross sections of the downward annular recess (11) and the upward annular recess (23) are both isosceles triangles or semicircles, and after closing together, the downward annular recess (11) and the upward annular recess (23) are a rhombus structure or circular structure; preferably, the cross sections of the downward annular recess (11) and the upward annular recess (23) are both isosceles right triangles, and after closing together, the downward annular recess (11) and the upward annular recess (23) are a square structure.

8. The battery cap as claimed in claim 7, wherein after closing together, the downward annular recess (11) and the upward annular recess (23) compress the sealing ring (6), and the compression ratio of the sealing ring (6) is 20 - 30%, preferably 25%.

9. The battery cap as claimed in claim 1, wherein the outer periphery dimension of the anti-explosion valve plate (2) is the same as an outer periphery dimension of the orifice plate (3).

10. The battery cap as claimed in claim 1, wherein an upper surface of the anti-explosion valve plate (2) is provided with an encircling anti-explosion groove (24), and the anti-explosion groove (24) is located at the inside of the upward annular recess (23).

11. The battery cap as claimed in claim 1, wherein the bottom of the downward recess (31) is provided with an encircling orifice plate anti-explosion groove (32).

12. The battery cap as claimed in claim 1, wherein the cross section of the internal washer (4) is a T-shaped structure, and the internal washer (4) comprises a middle washer layer (41) which is located at a portion between the anti-explosion valve plate (2) and the orifice plate (3), an upper side wall (42) which is located on an outer side of the anti-explosion valve plate (2) and a lower side wall (43) which is located on an outer side of the orifice plate (3); preferably, the upper side wall (42) squeezes the anti-explosion valve plate (2), and the lower side wall (43) squeezes the orifice plate (3); preferably, the thickness of the middle washer layer (41) is slightly greater than the height of the boss structure (22); and preferably, the thickness of the upper side wall (42) is slightly greater than the thickness of the anti-explosion valve plate (2).

13. The battery cap as claimed in claim 1, wherein the anti-explosion valve plate (2) is connected to the top cover (1) by means of welding, and the downward recess (31) is connected to the upward recess (21) by means of welding; preferably, the height of the top cover (1) is less than 2.1 mm, preferably less than or equal to 1.7 mm; preferably, the height of the anti-explosion valve plate (2) is less than 1.3 mm, preferably less than or equal to 0.6 mm; preferably, the height of the orifice plate (3) is less than 0.5 mm, preferably less than or equal to 0.4 mm; and preferably, the total height of the top cover (1), the anti-explosion valve plate (2) and the orifice plate (3) is less than 3.9 mm, preferably less than or equal to 2.7 mm.

14. A battery, wherein the battery comprises the battery cap as claimed in any one of claims 1 to 13, an external washer (5) and a shell,
wherein the external washer (5) directly contacts a side wall of the top cover (1) and portions of upper and lower surfaces of the top cover (1) which are close to the outer periphery thereof, and is used for connecting and sealing the battery cap and the shell.

15. The battery cap as claimed in claim 14, wherein the anti-explosion valve plate (2) is connected to the top cover (1) by means of wire welding (12), and the wire welding (12) is continuous or segmented; preferably, the external washer (5) does not cover the wire welding (12) at the position where the external washer (5) contacts the upper surface of the top cover (1); preferably, the portion of the external washer (5) which contacts the upper surface of the top cover (1) is provided with an encircling protrusion (51); and preferably, the wire welding (12) is continuous, and the external washer (5) covers the wire welding (12) at the position where the external washer (5) contacts the upper surface of the top cover (1).
